# EUROPÄISCHE PATENTSCHRIFT

(11) **EP 3 964 060 B1**
(45) Veröffentlichungstag und Bekanntmachung des Hinweises auf die Patenterteilung: **04.09.2024**
(21) Anmeldenummer: 21184528.4
(22) Anmeldetag: 08.07.2021
(51) Int. Cl.: A01M 7/00, A01C 23/00

(54) **SPRITZVORRICHTUNG UND ZUGEHÖRIGE LANDWIRTSCHAFTLICHE FELDSPRITZE**
SPRAYING DEVICE AND CORRESPONDING AGRICULTURAL SPRAYER
DISPOSITIF DE PULVÉRISATION ET PULVÉRISATEUR AGRICOLE ASSOCIÉ

(30) Priorität: 07.09.2020 DE 102020123308
(43) Veröffentlichungstag der Anmeldung: 09.03.2022
(73) Patentinhaber: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(56) Entgegenhaltungen:
- WO-A1-2012/088014
- US-A- 5 971 294

## Beschreibung

Die Erfindung betrifft eine Spritzvorrichtung für eine landwirtschaftliche Feldspritze zum dosierten Ausbringen von Spritzflüssigkeit, vorzugsweise auf landwirtschaftlichen Nutzflächen. Die Spritzvorrichtung umfasst ein schwenkbares Spritzgestänge mit zwei seitlichen Auslegern, die jeweils eine Mehrzahl von Ausbringelementen zum Versprühen und/oder Feinverteilen der Spritzflüssigkeit aufweisen. Die Erfindung betrifft ferner eine landwirtschaftliche Feldspritze mit einer solchen Spritzvorrichtung.

Landwirtschaftliche Feldspritzen werden zum Ausbringen bzw. zur Applikation von flüssigen Wirkstoffen, z. B. Pflanzenschutz- und/oder Düngemittel, verwendet. Derartige Feldspritzen mit einem quer zur Fahrtrichtung orientierten und über einen Pflanzenbestand bewegten Spritzgestänge sind in unterschiedlichen Ausführungsvarianten bekannt und beispielhaft beschrieben in den Dokumenten EP 3 007 553 B1 oder EP 2 591 657 A1.

Das Dokument US 5 971 294 A offenbart ein Sprühsystem, das mit einer Sprühsteuerung ausgestattet ist, die eine verringerte Einspritzverzögerung aufweist und die Ungleichmäßigkeit der Einspritzverzögerung über die Länge eines Sprüharms reduziert. Eine Pumpe ist mit Sprühdüsen, die entlang des Spritzgestänges installiert sind, durch Verteiler verbunden, die das Spritzgestänge in eine vorbestimmte Anzahl von Zonen unterteilen. Jede Zone hat einen entsprechenden Verteiler, und jeder Verteiler ist über eine Leitung Länge mit den Spritzdüsen verbunden.

Ferner offenbart das Dokument WO 2012/088014 A1 ein Flüssigkeitsverteilungssystem an einem Auslegerarm einer Feldspritze. Das Fluidverteilungssystem umfasst eine Fluidversorgungsleitung, die mit einem Fluidvorrat verbunden ist, und eine Vielzahl von Sprühdüsen, die entlang des Auslegerarms angebracht sind. Das Flüssigkeitsverteilungssystem umfasst auch einen Verteiler, der die Flüssigkeitszufuhrleitung mit der Vielzahl von Sprühdüsen fluidisch verbindet.

Mit derartigen Feldspritzen soll das Ziel verfolgt werden, ein definiertes Flüssigkeitsvolumen an Spritzflüssigkeit, z. B. Pflanzenschutz- und/oder Düngemittel, gleichmäßig und mit definierbarer Intensität auf einem Pflanzenbestand auszubringen. Um die Spritzflüssigkeit großflächig auf den zu bearbeitenden Nutzflächen auszubringen, weisen Spritzgestänge derartiger Feldspritzen seitliche faltbare Ausleger mit großer Arbeitsbreite auf, teilweise von mehr als zwanzig Metern. Für Transportfahrten werden solch breite Spritzgestänge gefaltet und eingeklappt. Im ausgeklappten Zustand sind die Ausleger quer zur Fahrtrichtung angeordnet. Am Spritzgestänge sind in Abständen zueinander angeordnete Ausbringelemente vorhanden zum dosierten Ausbringen der Spritzflüssigkeit. Die Ausbringelemente erzeugen einen zum Boden bzw. zum Pflanzenbestand hin ausgerichteten Sprühkegel zum gewünschten Verteilen der Spritzflüssigkeit. Das Ausbringelement kann eine Spritzdüse oder ein Düsenträger sein, in dem wiederum wenigstens eine Spritzdüse angebracht ist.

Bei den aus der Praxis bekannten Feldspritzen sind die Ausbringelemente eines Auslegers oder zumindest eines Teilabschnitts, z. B. einer Teilbreite, des Auslegers an eine gemeinsame Flüssigkeitsleitung angeschlossen und von dieser gespeist. Diese Flüssigkeitsleitung wird auch als Ausgangsleitung oder Düsenrohr bezeichnet. Das Düsenrohr ist am Ausleger angeordnet und zumindest abschnittsweise entlang dessen Längsrichtung geführt, d. h. in der Richtung entlang derer auch die Ausbringelemente beabstandet zueinander angeordnet sind.

Ein Nachteil herkömmlicher Spritzgestänge ist, dass es beim An- und Abschalten des Spritzgestänges oder bei Wechsel der Spritzflüssigkeit, mit der das Spritzgestänge gespeist wird, zu zeitlich starken Verzögerungen kommen kann, bis die Spritzflüssigkeit die Ausbringelemente erreicht. Nachteilig ist ferner, dass ein Zeitverzug, mit dem Spritzflüssigkeit die einzelnen Ausbringelemente erreicht, für die Ausbringelemente, die von einem gemeinsamen Düsenrohr gespeist werden, stark unterschiedlich sein kann. Dies führt zu einer zumindest zeitweisen ungleichmäßigen Verteilung der Spritzflüssigkeit.

Es ist somit eine Aufgabe der Erfindung, eine verbesserte Technik zum dosierten Ausbringen von Spritzflüssigkeit mittels eines Spritzgestänges bereitzustellen, mittels derer Nachteile herkömmlicher Techniken vermieden werden können. Die Aufgabe der Erfindung ist es insbesondere, eine Technik zum dosierten Ausbringen von Spritzflüssigkeit mittels eines Spritzgestänges bereitzustellen, mittels welcher ein gleichmäßiges Verteilen der Spritzflüssigkeit und eine schnelle Reaktionszeit beim An- und Abschalten des Spritzgestänges oder bei Wechsel der Spritzflüssigkeit ermöglicht wird.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem allgemeinen Gesichtspunkt der Erfindung wird eine Spritzvorrichtung für eine landwirtschaftliche Feldspritze zum dosierten Ausbringen von Spritzflüssigkeit, vorzugsweise auf landwirtschaftlichen Nutzflächen, bereitgestellt. Die Spritzvorrichtung umfasst ein schwenkbares Spritzgestänge, umfassend zwei seitliche Ausleger, die jeweils eine Mehrzahl von Ausbringelementen zum Versprühen und/oder Feinverteilen der Spritzflüssigkeit aufweisen.

Erfindungsgemäß ist an jedem Ausleger mindestens ein Fluidverteiler zum Verteilen der Spritzflüssigkeit auf mehrere Teilströme angeordnet. Jeder Fluidverteiler weist mindestens einen Verteilereinlass zum Zuführen von Spritzflüssigkeit und mehrere Verteilerauslässe für die Teilströme auf. Die Verteilereinlässe und -auslässe können beispielsweise als Anschlüsse für Fluidleitungen ausgeführt sein. Der Fluidverteiler ist somit ausgebildet, einen über den mindestens einen Verteilereinlass zugeführten Flüssigkeitsstrom in mehrere Teilströme aufzuteilen, die jeweils über einen der Verteilerauslässe aus dem Fluidverteiler austreten. Der Flüssigkeitsstrom von Spritzflüssigkeit kann somit mittels des mindestens einen Fluidverteilers in Teilströme verzweigt und mittels der Ausbringleitungen auf getrennten Teilströmungswegen von dem mindestens einen Fluidverteiler zu den jeweiligen Ausbringelementen gefördert werden.

Ferner ist jedes der Ausbringelemente über eine Ausbringleitung mit einem der Verteilerauslässe fluidisch verbunden. Ein Ende jeder Ausbringleitung ist somit an einem Verteilerauslass angeschlossen, während das andere Ende der Ausbringleitung an einem Ausbringelement oder, falls sich die Ausbringleitung verzweigt, an mehreren Ausbringelementen angeschlossen ist. Entsprechend werden Ausbringelemente eines Teilabschnitts des Auslegers nicht durch ein gemeinsames Düsenrohr gespeist, sondern jedes Ausbringelement wird durch eine Leitung, hier als Ausbringleitung oder auch als Düsenleitung bezeichnet, gespeist. Ein Grundgedanke der Erfindung besteht somit darin, auf ein herkömmliches Düsenrohr zur Speisung von mehreren Spritzdüsen zu verzichten und stattdessen mindestens einen Fluidverteiler und daran angeschlossene Ausbringleitungen vorzusehen, um den Spritzdüsen über hydraulisch parallele Teilströme Spritzflüssigkeit zuzuführen.

Dies bietet den Vorteil, dass Unterschiede in den Zeitverzügen, bis die Spritzflüssigkeit die einzelnen Ausbringelemente erreicht, entsprechend reduziert und je nach Ausführungsform sogar verhindert werden können.

So wurde im Rahmen von Versuchen bei der Entwicklung der Erfindung beispielsweise festgestellt, dass ein herkömmliches gemeinsames Düsenrohr, über welches beispielsweise alle Spritzdüsen einer Teilbreite eines Auslegers gespeist werden, zu großen Zeitdifferenzen führt, bis eine in dieses Düsenrohr eingespeiste Spritzflüssigkeit die erste vs. die letzte über das Düsenrohr gespeiste Spritzdüse erreicht. Denn um alle an das Düsenrohr angeschlossenen Düsenstöcke mit ausreichend Spritzflüssigkeit versorgen zu können und um sicherzustellen, dass die Fluiddrücke, die an den einzelnen Düsenstöcken anliegen, sich nicht zu sehr unterscheiden, benötigt das Düsenrohr einen entsprechend großen Durchmesser, z. B. 20 mm, was wiederum zu einer relativ geringen Strömungsgeschwindigkeit im Düsenrohr führt. Entsprechend kann es vergleichsweise lange dauern, bis Spritzflüssigkeit an der letzten Spritzdüse des Düsenrohrs ankommt. Bei einer lediglich beispielhaft angenommenen Verzögerung von 18 Sekunden, bis an einem drei Meter langen Teilabschnitts eines Auslegers die eingespeiste Spritzflüssigkeit alle Spritzdüsen erreicht hat, hätte eine Feldspritze bei einer angenommenen Fahrgeschwindigkeit von 15 km/h bereits 75 Meter Wegstrecke in Fahrtrichtung zurückgelegt. Insbesondere beim An- und Abschalten des Spritzgestänges oder bei Wechsel der Spritzflüssigkeit im Fahrbetrieb führt dies zu einer ungleichmäßigen Verteilung der Spritzflüssigkeit oder zu unerwünschten Wartezeiten.

Entsprechend ist an jedem der Ausleger anstatt eines herkömmlichen Düsenrohrs mindestens ein Fluidverteiler zum Verteilen der Spritzflüssigkeit auf mehrere Teilströme vorgesehen, wobei jedes der Ausbringelemente über eine Ausbringleitung von einem der mindestens einen Fluidverteiler gespeist wird. Dies ermöglicht ein gleichmäßigeres Ausbringen von Spritzflüssigkeit, insbesondere beim Anschalten, d. h. beim Start des Spritzvorgangs, oder beim Wechsel der Spritzflüssigkeit.

Das Ausbringelement kann eine Spritzdüse oder ein Düsenträger (auch als Düsenstock bezeichnet) sein, in dem wiederum wenigstens eine Spritzdüse angebracht ist. Das Ausbringelement kann ein Schaltventil oder steuerbare Blende zur Steuerung des Durchflusses umfassen. Die Ausbringelemente können optional mittels Pulsweitenmodulation ansteuerbar und/oder regelbar sein. Die Ausbringelemente sind beabstandet zueinander in Längsrichtung des Spritzgestänges angebracht, z. B. in Abständen von beispielsweise 25 cm oder 50 cm, und können separat ansteuerbar sein.

In einer bevorzugten Ausführungsform sind die Ausbringleitungen derart ausgelegt, vorzugsweise dimensioniert, dass die einem Fluidverteiler zugeordneten Teilströme auf ihren getrennten Teilströmungswegen vom Fluidverteiler zu den jeweiligen Ausbringelementen im Wesentlichen den gleichen Druckabfall und gleichen Zeitverzug, bis die Teilströme an dem jeweiligen Ausbringelement ankommen, aufweisen. Unter dem gleichen Zeitverzug können Unterschiede in den Zeitverzügen von kleiner 5 Sekunden, vorzugsweise kleiner 3 Sekunden, verstanden werden. Diese Ausbringleitungen können entsprechend ausgelegt werden, indem die Länge und/oder der Durchmesser der Ausbringleitungen, die am gleichen Fluidverteiler angeschlossen sind, zweckmäßig festgelegt wird. Der Durchmesser der Ausbringleitungen ist bevorzugt gleich groß.

In einer besonders bevorzugten Ausführungsform ist jedes der Ausbringelemente über eine separate Ausbringleitung mit einem der Verteilerauslässe fluidisch verbunden. Anders ausgedrückt verbindet jede Ausbringleitung genau ein Ausbringelement mit einem Verteilerauslass. Gemäß dieser Ausführungsform weisen die Ausbringleitungen somit keine Verzweigung zwischen dem Verteilerauslass und dem Ausbringelement auf. Unterschiede in den Zeitverzügen, bis die Spritzflüssigkeit die einzelnen Ausbringelemente erreicht, können hier entsprechend besonders vorteilhaft reduziert und je nach Ausführungsform sogar verhindert werden.

In einer alternativen Ausführungsform weisen zumindest einige der Ausbringleitungen, vorzugsweise alle Ausbringleitungen, jeweils zumindest eine Verzweigungsstelle auf, die eine Mehrzahl von Leitungszweigen bereitstellt, wobei jeweils ein Leitungszweig die Verzweigungsstelle mit einem Ausbringelement verbindet. An der Verzweigungsstelle wird der vom Verteilerauslass ankommende Teilvolumenstrom nochmals aufgeteilt. Im Vergleich zu separaten Ausbringleitungen für alle Ausbringelemente kann hier Bauraum für die Ausbringleitungen optimiert werden. Die Verzweigungsstelle kann nach Art einer Y-Verzweigung oder nach Art einer T-Verzweigung ausgebildet sein, beispielsweise durch ein T-Stück oder ein zweckmäßig ausgeführtes Verbindungsstück. In einer Ausführungsvariante ist genau eine solche Verzweigungsstelle je Ausbringleitung vorgesehen.

In einer weiteren Ausführungsform weisen diejenigen Ausbringleitungen, die am gleichen Fluidverteiler angeschlossen sind, jeweils die gleiche Länge auf. Anders ausgedrückt haben in dieser Ausführungsform alle Ausbringleitungen jeweils eines Fluidverteilers die gleiche Länge, wohingegen optional die Möglichkeit besteht, dass Ausbringleitungen von verschiedenen Fluidverteilern unterschiedlich lang sein können. Hierbei können alle Ausbringleitungen jeweils eines Fluidverteilers ferner bevorzugt den gleichen Durchmesser aufweisen und entsprechend den gleichen Druckabfall innerhalb der Ausbringleitung aufweisen.

Gemäß einer Ausführungsvariante weisen jedoch alle Ausbringleitungen der Spritzvorrichtung die gleiche Länge auf. Anders ausgedrückt sind in dieser Variante alle Strömungswege durch die Ausbringleitungen zwischen einem Ausbringelement und dem jeweiligen Verteilerauslass gleich lang. Dies bietet den Vorzug, dass die Teilströmungswege vom Verteilerauslass zum Ausbringelement für alle Ausbringelemente gleich lang sind, obwohl die räumlichen Abstände der Ausbringelemente zum Verteilerauslass, über den sie gespeist werden, zum Teil stark unterschiedlich sein können. Besonders bevorzugt ist, wenn die alle Ausbringleitungen der Spritzvorrichtung gleich lang sind und den gleichen Durchmesser aufweisen und entsprechend den gleichen Druckabfall innerhalb der Ausbringleitung aufweisen. Folglich können Differenzen in den Zeitverzügen, bis die aus den Verteilerauslässen austretende Spritzflüssigkeit die hierüber gespeisten Ausbringelemente erreicht, verhindert werden.

Gemäß einer alternativen Ausführungsvariante sind jedoch Ausbringleitungen von zumindest zwei verschiedenen Fluidverteilern unterschiedlich lang. Hierbei kann der an jedem Ausleger der Spritzvorrichtung angeordnete mindestens eine Fluidverteiler somit einen ersten Fluidverteiler und einen zweiten Fluidverteiler umfassen, wobei die Ausbringleitungen, die am ersten Fluidverteiler angeordnet sind, eine unterschiedliche Länge im Vergleich zu den Ausbringleitungen aufweisen, die am zweiten Fluidverteiler angeordnet sind. Beispielsweise ist somit eine Ausführungsform möglich, bei der die jeweiligen einem bestimmten Fluidverteiler zugeordneten Ausbringleitungen gleich lang sind, jedoch die Ausbringleitungen von verschiedenen Fluidverteilern unterschiedlich lang sind.

Gemäß einem weiteren Aspekt kann die Spritzvorrichtung ferner eine Steuereinrichtung aufweisen, die zur Steuerung der Ausbringelemente mit diesen in Signalverbindung steht. Hierbei ist die Steuereinrichtung ausgebildet, Schaltzeiten der Ausbringelemente zum Start des Spritzbetriebs in Abhängigkeit von hinterlegten Werten, nachfolgend als Offset-Werte bezeichnet, und/oder von Sensordaten einer Sensoreinrichtung zu bestimmen. Die Offset-Werte und/oder die Sensordaten für mindestens einen Teil der Fluidverteiler, vorzugsweise für alle Fluidverteiler, können eine Durchflusszeit durch die Ausbringleitungen des Fluidverteilers oder einen Zeitverzug, bis Spritzflüssigkeit die jeweiligen Ausbringelemente des Fluidverteilers erreicht, angeben. Die Offset-Werte und/oder die Sensordaten können auch einen Wert oder Werte angeben, aus denen ein Maß für die Durchflusszeit oder den Zeitverzug ableitbar ist. Falls z. B. die Ausbringleitungen eines Fluidverteilers eine andere Länge aufweisen als die Ausbringleitungen eines anderen Fluidverteilers, können die Offset-Werte beispielsweise den Unterschied in der Durchflusszeit oder im Zeitverzug angeben, der sich aus der Längendifferenz der Ausbringleitungen ergibt.

Entsprechend kann die Spritzvorrichtung eine Sensoreinrichtung (Sensorik) zur Erfassung solcher Sensordaten aufweisen. Ein Beispiel für eine solche Sensoreinrichtung wäre eine Durchflusssensorik, bei der Sensoren an verschiedenen Positionen innerhalb der Ausbringleitung angeordnet sind. Beim Aktivieren, beispielsweise des Förderns, der Spritzflüssigkeit, z. B. durch Aktivieren einer Pumpe oder durch Öffnen eines Ventils, kann eine Zeitdifferenz zwischen den zwei Sensoren der Durchflusssensorik und somit eine Durchflusszeit ermittelt werden. Eine andere Möglichkeit ist eine Sensorik, z.B. ein Laser, ein Radar, oder eine Kamera, welche jeweils detektiert, ab wann von dem Ausbringelement Spritzflüssigkeit abgeben wird. Somit kann beispielsweise wiederum durch eine Zeitdifferenz zwischen dem Aktivieren des Förderns der Spritzflüssigkeit und dem Austritt von Spritzflüssigkeit aus dem Ausbringelement eine Durchflusszeit ermittelt werden. Alternativ oder zusätzlich ist auch eine Berechnung der Durchflusszeit möglich, beispielsweise anhand eines Förderdrucks und eines Leitungsquerschnitts. Denkbar wäre auch, dass für die Leitungen jeweils feste Parameter hinterlegt sind.

Die Verwendung derartiger Offset-Werte oder Sensordaten ist besonders vorteilhaft, wenn Ausbringleitungen von zumindest zwei verschiedenen Fluidverteilern unterschiedlich lang sind. Entsprechend können hierüber dennoch die Schaltzeiten für die Ausbringelemente mehrerer Fluidverteiler exakt eingehalten werden. Mittels der vorstehend genannten Offset-Werte oder Sensordaten können Unterschiede in den Durchflusszeiten von Spritzflüssigkeit durch die Ausbringleitungen, die sich ergeben, wenn Ausbringleitungen von verschiedenen Verteilern unterschiedlich lang sind, berücksichtigt und durch Anpassung der Schaltzeiten der Ausbringelemente kompensiert werden, z. B. durch Berücksichtigung bei der zeitlichen Ansteuerung der Ausbringelemente.

In einer bevorzugten weiteren Ausführungsform sind die Ausbringleitungen als Schlauchleitungen und/oder als flexible Leitungen ausgeführt oder umfassen zumindest Abschnitte, die als Schlauchleitungen und/oder als flexible Leitungen ausgeführt sind. Dies ermöglicht eine kosteneffiziente, platzsparende Anbringung der Ausbringleitungen am Ausleger. Alternativ können die Ausbringleitungen auch als Rohre ausgeführt sein oder Rohrleitungen umfassen, beispielsweise aus einem metallischen Werkstoff.

In einer weiteren Ausführungsform ist jeder Ausleger in mehrere Teilabschnitte unterteilt, wobei an jedem Teilabschnitt eine Mehrzahl von Ausbringelementen angeordnet ist und jedes Ausbringelement genau einem Teilabschnitt zugeordnet ist. In dieser Ausführungsform weist jeder Ausleger mehrere Fluidverteiler auf, derart, dass an jedem Teilabschnitt ein Fluidverteiler angeordnet ist und die dem jeweiligen Teilabschnitt zugeordneten Ausbringelemente mit dem Fluidverteiler dieses Teilabschnitts über entsprechende Ausbringleitungen verbunden sind. Vorzugsweise sind die Ausleger jeweils in Längsrichtung der Ausleger in diese mehrere Teilabschnitte unterteilt, wobei die Teilabschnitte und die zugeordneten Fluidverteiler in Längsrichtung nebeneinander angeordnet sind. Entsprechend ist eine Gruppe von Ausbringelementen, die einem Teilabschnitt zugeordnet sind, in Längsrichtung benachbart zu einer weiteren Gruppe von Ausbringelementen angeordnet, die einem benachbarten Teilabschnitt und Fluidverteiler zugeordnet sind.

In einer vorteilhaften Variante dieser Ausführungsform sind die Fluidverteiler der Teilabschnitte jeweils mittig in Längsrichtung des Auslegers am Teilabschnitt angeordnet. Anders ausgedrückt sind die Fluidverteiler mittig in Längsrichtung angeordnet zu der Gruppe an Ausbringelementen, die mit dem Fluidverteiler fluidisch verbunden sind. Dies ermöglicht eine kompakte Anbringung der Ausbringleitungen am Ausleger. In einer alternativen Ausführungsform, in der jeder Ausleger nur einen zentralen Fluidverteiler aufweist, kann dieser mittig in Längsrichtung am Ausleger angeordnet sein.

Unter der Längsrichtung des Auslegers wird hier die Richtung verstanden, in der sich der Ausleger erstreckt und in der die Düsenstöcke entlang des Auslegers beabstandet zueinander angeordnet sind. Die Arbeitsbreite des Spritzgestänges ergibt sich aus der Länge des Spritzgestänges entlang dessen Längsrichtung im ausgeklappten Zustand.

Jeder Ausleger kann wiederum mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges mehrfach gefaltet werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze. Ein Teilabschnitt kann einem solchen Gestängeabschnitt oder einer Teilbreite des Auslegers bzw. des Spritzgestänges entsprechen. Aus dem Stand der Technik ist bekannt, dass Ausleger bzw. das Spritzgestänge in Teilbreiten unterteilt sein können, sodass nicht immer mit voller Arbeitsbreite gearbeitet werden muss. Die vorstehend genannten Gestängeabschnitte oder Teilbreiten des Spritzgestänges können jedoch auch jeweils mehrere der vorstehend genannten Teilabschnitte und entsprechend mehrere Fluidverteiler mit zugeordneten Ausbringelementen aufweisen. Hierdurch kann die Leitungslänge der Ausbringleitungen reduziert werden.

Erfindungsgemäß weisen die Ausbringleitungen einen Innendurchmesser von kleiner 10 mm auf. Ferner können die Ausbringleitungen einen Innendurchmesser weiter vorzugsweise von kleiner 6 mm aufweisen. Der Innendurchmesser kann beispielsweise 4 mm aufweisen. Dadurch können im Vergleich zu herkömmlichen Düsenrohren wesentlich höhere Strömungsgeschwindigkeiten erreicht werden. In einer weiteren Ausführungsform können die Ausbringleitungen eine Mindestlänge von 25 cm oder von mindestens 50 cm oder von mindestens 1 Meter aufweisen.

Vorstehend wurde bereits festgestellt, dass es besonders vorteilhaft ist, wenn die Ausbringleitungen die gleiche Länge aufweisen. In einer weiteren Ausführungsform unterscheiden sich die Ausbringleitungen in ihren Längen um nicht mehr als 30%, wodurch die Differenzen in den Zeitverzügen, bis Spritzflüssigkeit über die Ausbringleitungen die Ausbringelemente erreicht, im Vergleich zu einem herkömmlichen Düsenrohr ebenfalls vorteilhaft reduziert werden können.

In einer weiteren Ausführungsform können die Verteilerauslässe des Fluidverteilers nicht auf einer Geraden liegen. Dadurch kann der Fluidverteiler kompakter ausgeführt werden und der Bauraum zur Anordnung der Ausbringleitungen besser ausgenutzt werden.

In einer weiteren Ausführungsform sind die Ausbringleitungen derart ausgelegt, vorzugsweise dimensioniert, dass ein Druckabfall vom Fluidverteiler bis zum jeweiligen Ausbringelement jeweils maximal 2 bar ist, weiter vorzugsweise jeweils maximal 1,5 bar ist. Dies kann durch entsprechende zweckmäßige Wahl des Durchmessers und Länge der Ausbringleitung realisiert werden. Dies verbessert das möglichst gleichmäßige Ausbringen der Spritzflüssigkeit.

Alternativ oder zusätzlich können die Ausbringleitungen derart ausgelegt sein, dass ein Zeitverzug der Teilströme für ihren Strömungsweg vom Fluidverteiler bis zum Erreichen der jeweiligen Ausbringelemente jeweils maximal fünf Sekunden, weiter vorzugsweise maximal zwei Sekunden, weiter vorzugsweise maximal eine Sekunde, ist. Dies kann unter Berücksichtigung des am Verteilerauslass im Spritzbetrieb anliegenden üblichen Fluiddrucks wiederum durch entsprechende zweckmäßige Wahl des Durchmessers und Länge der Ausbringleitung realisiert werden. Dadurch können schnelle Reaktionszeiten beim An- und Abschalten des Spritzgestänges oder bei Wechsel der Spritzflüssigkeit ermöglicht werden.

In einer weiteren Ausführungsform kann eine Länge des Fluidverteilers in Längsrichtung des Auslegers kleiner gleich drei Meter, vorzugsweise kleiner gleich zwei Meter, weiter vorzugsweise kleiner gleich ein Meter, sein. Anstatt eines langen herkömmlichen Düsenrohrs mit großen Durchmesser können somit im Vergleich hierzu kompakte Fluidverteiler mit mehreren vergleichsweise dünnen Ausbringleitungen zum Einsatz kommen, was die Flexibilität bei der Ausnutzung des Bauraums erhöht.

In einer weiteren Ausführungsform kann die Anzahl der Verteilerauslässe des Fluidverteilers im Bereich von 4 bis 16 oder im Bereich von 6 bis 12 liegen. Je nach Gesamtanzahl der Ausbringelemente werden somit mehrere in Längsrichtung des Auslegers verteilt angeordnete Fluidverteiler benötigt.

In einer weiteren Ausführungsform weisen die Ausbringleitungen oder zumindest ein Teil der Ausbringleitungen einen nicht-geraden Verlauf oder anders ausgedrückt, einen gekrümmten Verlauf, auf. Beispielsweise können die Ausbringleitungen oder zumindest ein Teil der Ausbringleitungen mindestens einen Abschnitt aufweisen, der in Längsrichtung des Auslegers entlang eines der Ausleger geführt ist und mindestens einen Abschnitt aufweisen, der in Vertikalrichtung entlang eines der Ausleger geführt ist. Ferner besteht optional die Möglichkeit, dass zumindest ein Teil der Ausbringleitungen S-förmig oder mäanderförmig geführt ist.

Die Spritzvorrichtung kann ferner mindestens einen Vorratstank für Spritzflüssigkeit, z. B. Wasser, Pflanzenschutzmittel, Dünger und/oder dergl., aufweisen. Es können mehrere Vorratstanks vorgesehen sein. Um die Spritzflüssigkeit von dem mindestens einen Vorratstank mit einem Förderdruck in Richtung des mindestens einen Verteilers zu fördern, umfasst die Spritzvorrichtung ein oder mehrere Druckerzeugungsglieder, z. B. in Form einer Pumpe (z.B. Kolbenpumpen, Kreiselpumpe oder dergl.). Alternativ wäre es auch denkbar, dass der Förderdruck mittels eines Kompressors erzeugt wird, welcher bspw. wirkungstechnisch mit dem Vorratstank verbunden ist.

Gemäß einem weiteren Gesichtspunkt betrifft die Erfindung ferner eine landwirtschaftliche Feldspritze, umfassend eine Spritzvorrichtung, wie sie in diesem Dokument beschrieben ist. Die Feldspritze kann eine selbstfahrende oder eine mittels eines Zugfahrzeugs gezogene oder eine an ein Zugfahrzeug angebaute Feldspritze sein. Die selbstfahrende Verteilmaschine kann zudem eine autonom fahrende Landmaschine sein, beispielsweise eine vollautonom oder teilautonom fahrende Landmaschine.

Das Spritzgestänge weist eine hohe Arbeitsbreite auf, d. h. eine Arbeitsbreite, die wesentlich größer als eine Breite des Trägerfahrzeugs oder der Feldspritze ist, z. B. ein Vielfaches der Breite des Trägerfahrzeugs.

Die Feldspritze kann in an sich bekannter Weise eine Stelleinrichtung, z. B. Pneumatik- oder Hydraulikzylinder, umfassen, mittels der eine Stellkraft erzeugbar ist, um das Verteilergestänge um die Schwenkachse zu bewegen. Zur beweglichen Halterung am Trägerfahrzeug kann das Spritzgestänge beispielsweise an einem Träger gehaltert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist. Ferner kann der Träger höhenverstellbar an dem Aufbau- oder Rahmenabschnitt oder einer Rahmenkonstruktion des Trägerfahrzeugs angebracht sein, wobei die Höhenverstellung insbesondere mittels eines zwischen der Rahmenkonstruktion und dem Träger angebrachten Viergelenks, z. B. in Form eines Parallelogramms, erfolgen kann. Auch kann die Höhenverstellung mittels eines zwischen der Rahmenkonstruktion und dem Träger angebrachten Linearschlittens erfolgen. Zur Höhenverstellung kann dem Parallelogramm oder dem Linearschlitten z. B. ein Linearantrieb in Form eines Hydraulik- oder Pneumatikzylinders zugeordnet sein, so dass der Höhenabstand zwischen dem Verteilgestänge und einer Bodenoberfläche bzw. einem Pflanzenbestand variabel veränderbar ist. Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Ferner können die zwei seitlichen Ausleger jeweils über eine vertikale Schwenkachse drehbar mit einem Mittelteil des Spritzgestänges verbunden sein. Vorstehend wurde bereits festgestellt, dass jeder Ausleger optional zueinander verschwenkbare Segmente aufweisen kann, die um aufrechte Achsen zueinander verschwenkbar sind. Zusätzlich können diese Segmente optional ferner einer senkrecht zur Fahrtrichtung der landwirtschaftlichen Verteilmaschine angeordneten Ebene relativ zueinander verschwenkbar sein, d.h. diese Segmente können um eine in Fahrtrichtung verlaufende Achse schwenkbar sein, um das Spritzgestänge möglichst gut an ein Bodenprofil anpassen zu können. Am Ausleger kann jeweils mindestens ein Abstandssensor zur Messung eines Abstands zum Boden oder Pflanzenbestand angeordnet sein, z. B. in Form eines Ultraschallsensors. Die Feldspritze und/oder das Spritzgestänge kann in an sich bekannter Weise ferner mindestens eine Sensoreinrichtung zur Erfassung einer Drehlage und/oder eine Drehgeschwindigkeit und/oder eine Beschleunigung des Verteilergestänges umfassen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Feldspritze mit einem, eine Rahmenkonstruktion aufweisenden Chassis und einer Spritzeinrichtung;
- Figur 2: eine schematische Hinteransicht einer Spritzvorrichtung gemäß einer Ausführungsform der Erfindung;
- Figur 3: eine schematische Ansicht eines Fluidverteilers mit angeschlossenen Ausbringleitungen gemäß einer weiteren Ausführungsform; und
- Figur 4: eine schematische Ansicht eines Fluidverteilers mit angeschlossenen Ausbringleitungen, die eine Verzweigungsstelle aufweisen, gemäß einer weiteren Ausführungsform.

Gleiche oder funktional äquivalente Elemente sind in den Figuren zum Teil mit denselben Bezugszeichen bezeichnet und zum Teil nicht gesondert beschrieben.

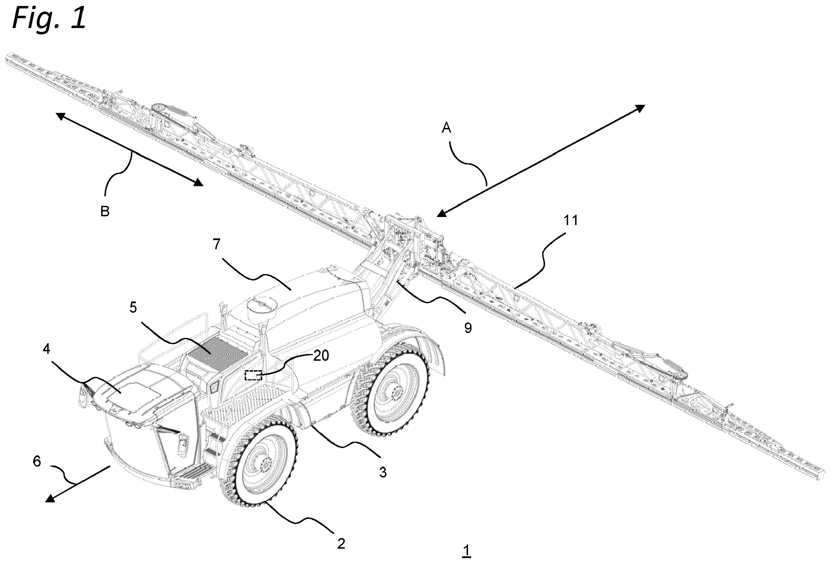

Figur 1 zeigt in einer Perspektivansicht eine Ausführungsvariante einer landwirtschaftlichen Feldspritze 1 mit einem, eine Rahmenkonstruktion aufweisenden Chassis 3, wobei das Chassis 3 zudem ein Fahrwerk 2 aufweist. Die Feldspritze 1 ist hier beispielhaft als eine selbstfahrende Feldspritze ausgeführt und umfasst eine Kabine 4, mit einem Bedienstand für eine Bedienperson und eine Antriebseinrichtung 5 (z.B. Motor). Im hinteren Bereich umfasst die Feldspritze 1 eine sich in einer Arbeitsstellung befindende und sich in großer Arbeitsbreite, z. B. 24 Meter oder mehr, quer zur Fahrtrichtung 6 erstreckendes Spritzgestänge 11, das um eine sich in Fahrtrichtung erstreckende Schwenkachse A mittels einer Stelleinrichtung verschwenkbar ist. Das Spritzgestänge 11, auch als Spritzbalkenanordnung bezeichnet, ist mittels eines höhenverstellbaren Parallelogrammgestänges 9 höhenverstellbar gegenüber dem Chassis 3. Am Chassis 3 ist zudem eine erfindungsgemäße Spritzvorrichtung angebaut, wobei in der Figur 1 hiervon lediglich das Spritzgestänge 11 und ein Vorratstank 7 dargestellt sind.

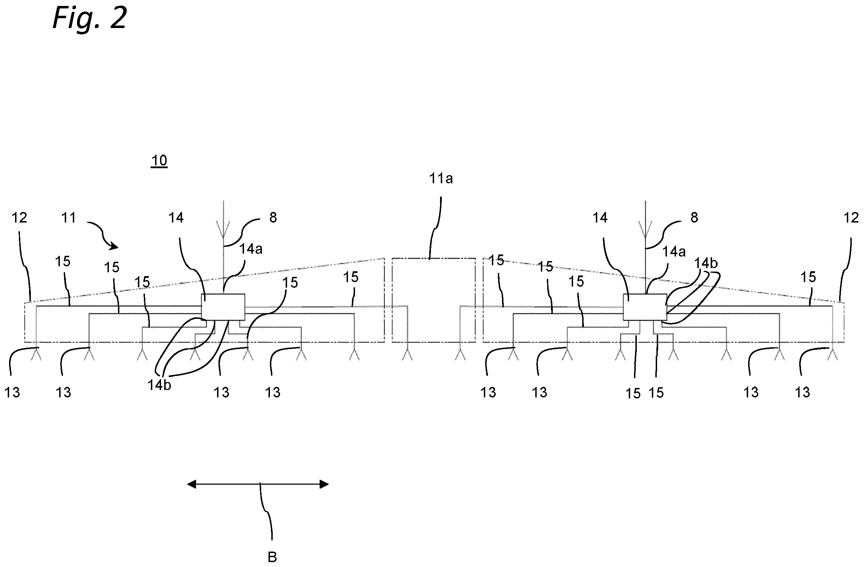

Eine Spritzvorrichtung 10 für eine landwirtschaftliche Feldspritze gemäß einer Ausführungsform ist in Figur 2 schematisch dargestellt. Die Spritzvorrichtung 10 dient zum dosierten Ausbringen von Spritzflüssigkeit auf landwirtschaftlichen Nutzflächen. Die in Figur 2 dargestellte Spritzvorrichtung 10 ist für eine Feldspritze ausgeführt, die eine kleinerer Arbeitsbreite aufweist als die in Figur 1 gezeigte Feldspritze 1. Die Spritzvorrichtung 10 umfasst das schwenkbares Spritzgestänge 11, welches zwei seitliche Ausleger 12 aufweist, die jeweils eine Mehrzahl von Ausbringelementen 13 zum Versprühen und/oder Feinverteilen der Spritzflüssigkeit aufweisen. Die Ausbringelemente 13 erzeugen einen zum Boden bzw. zum Pflanzenbestand hin ausgerichteten Sprühkegel zum gewünschten Verteilen des Wirkstoffes. Das Ausbringelement 13 kann eine Spritzdüse oder ein Düsenträger sein, in dem wiederum wenigstens eine Spritzdüse angebracht ist. Die Ausbringelemente 13 sind in Figur 2 nur schematisch anhand des von ihnen erzeugten Sprühkegels dargestellt.

Die zwei seitlichen Ausleger 12 sind jeweils über eine vertikale Schwenkachse drehbar mit einem Mittelteil 11a des Spritzgestänges 11 verbunden. An jedem Ausleger 12 ist ein Fluidverteiler 14 zum Verteilen der Spritzflüssigkeit auf mehrere Teilströme angeordnet. Jeder Fluidverteiler 14 weist mindestens einen Verteilereinlass 14a zum Zuführen von Spritzflüssigkeit auf und mehrere Verteilerauslässe 14b für die Teilströme.

Hierbei ist jedes der Ausbringelemente 13 über eine separate Ausbringleitung 15 mit einem der Verteilerauslässe 14b fluidisch verbunden. Der besseren Übersichtlichkeit wegen ist nicht jedes Ausbringelement 13, nicht jede Ausbringleitung 15 und nicht jeder Verteilerauslass 14b gesondert mit einem Bezugszeichen gekennzeichnet. In dem gezeigten Beispiel sind jedoch insgesamt 16 in Längsrichtung B des Spritzgestänges 11 gleichmäßig beabstandet angeordnete Ausbringelemente 13 dargestellt, denen jeweils über eine eigene Ausbringleitung 15 Spritzflüssigkeit zugeführt wird. Entsprechend weist jeder Fluidverteiler 14 in diesem Beispiel acht Verteilerauslässe 14b auf und an jedem Fluidverteiler sind entsprechend acht Ausbringleitungen 15 angeschlossen. Die Anzahl an Fluidverteiler, Ausbringelementen und Ausbringleitungen sind hier nur beispielhaft. Bei Spritzgestängen mit größerer Arbeitsbreiten können entsprechend mehrere Fluidverteiler pro Ausleger und eine höhere Anzahl von Ausbringelementen und Ausbringleitungen vorgesehen sein.

Die Spritzvorrichtung 10 umfasst ferner mindestens einen Vorratstank 7 für Spritzflüssigkeit, z. B. Wasser, Pflanzenschutzmittel, Dünger und/oder dergl. Es können mehrere Vorratstanks vorgesehen sein. Der Fluidverteiler 14 kann auch zwei oder mehrere Fluideinlässe 14a aufweisen, z. B. um den Fluidverteiler 14 wahlweise Spritzflüssigkeit aus unterschiedlichen Vorratstanks 7 zuzuführen.

Um die Spritzflüssigkeit von dem mindestens einen Vorratstank mit einem Förderdruck in Richtung des mindestens einen Fluidverteilers 14 zu fördern, umfasst die Spritzvorrichtung 10 z. B. eine oder mehrere Pumpen (z.B. Kolbenpumpen, Kreiselpumpe oder dergl.), entsprechende Flüssigkeitsleitungen und/oder Kreisläufe, sowie steuerbare Ventileinheiten, Durchflussmesser etc. Diese können in an sich bekannter und unterschiedlicher Weise ausgeführt sein. Der Flüssigkeitsplan stromauf der Fluidverteiler 14 ist daher hier nicht näher dargestellt.

Die Fluidverteiler 14 verzweigt einen Flüssigkeitsstrom 8 von Spritzflüssigkeit, die über den mindestens einen Verteilereinlass 14a in diesen eintritt, in Teilströme und gibt diese über die Verteilerauslässe 14b aus. Diese Teilströme werden dann über die Ausbringleitungen 15 auf getrennten Teilströmungswegen vom Fluidverteiler 14 zu den jeweiligen Ausbringelementen 13 gefördert. Das Vorsehen separater Ausbringleitungen 15 anstatt einer herkömmlichen Düsenleitung, die mehrere Ausbringelemente nacheinander speist, bietet den Vorzug, dass diese Ausbringleitungen 15 mit kleinerem Durchmesser ausgeführt werden können, da diese nur eine Teilmenge der Spritzflüssigkeit, nämlich nur die Spritzflüssigkeit, die über ein einzelnes Ausbringelement 13 ausgebracht wird, fördern müssen. Entsprechend schneller ist die Strömungsgeschwindigkeit in den einzelnen Ausbringleitungen 15 im Vergleich zu einem Düsenrohr, so dass insgesamt eine schnellere Reaktionszeit erzielt werden kann.

Diese Ausbringleitungen 15 sind hier als Schlauchleitungen und/oder als flexible Leitungen ausgeführt, die einen nicht-geraden (gekrümmten) Verlauf aufweisen. Die Ausbringleitungen sind so dimensioniert, dass es auf dem Weg vom Verteilerauslass 14b zum jeweiligen Ausbringelement 13 zu einem Druckabfall von jeweils maximal 1 bar kommt und ein Zeitverzug der Teilströme für ihren Strömungsweg vom Fluidverteiler 14 bis zum Erreichen der jeweiligen Ausbringelemente 13 jeweils maximal fünf Sekunden ist. Die Fluidverteiler 14 sind hier mittig in Längsrichtung B der Auslegers 12 angeordnet.

Vorstehend wurde bereits angemerkt, dass in Figur 2 ein Spritzgestänge 11 dargestellt ist, das eine kleine Arbeitsbreite aufweist. In einer weiteren Ausführungsform (nicht dargestellt), die für größere Arbeitsbreiten, wie z. B. für das in Figur 1 gezeigte Spritzgestänge 11 vorteilhaft ist, ist jeder Ausleger in mehrere Teilabschnitte unterteilt, wobei an jedem Teilabschnitt eine Mehrzahl von Ausbringelementen angeordnet ist und jedes Ausbringelement genau einem Teilabschnitt zugeordnet ist. In dieser Ausführungsform weist jeder Ausleger mehrere Fluidverteiler auf, derart, dass an jedem Teilabschnitt ein Fluidverteiler angeordnet ist und die dem jeweiligen Teilabschnitt zugeordneten Ausbringelemente mit dem Fluidverteiler dieses Teilabschnitts über entsprechende Ausbringleitungen verbunden sind. So kann jeder der Ausleger 12 zwei, drei, vier oder mehr Fluidverteiler 14 aufweisen, die in Längsrichtung B des Auslegers 12 beabstandet voneinander längs des Auslegers an diesem angeordnet sind. Entsprechend ist eine Gruppe von Ausbringelementen, die bestimmten Teilabschnitt zugeordnet sind, in Längsrichtung benachbart zu einer weiteren Gruppe von Ausbringelementen angeordnet, die einem benachbarten Teilabschnitt und Fluidverteiler zugeordnet sind.

Hierzu kann jeder Ausleger 12 mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges mehrfach gefaltet werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze.

Die vorgenannte Unterteilung in Teilabschnitte kann dieser Unterteilung in relativ zueinander beweglichen Gestängeabschnitten entsprechen. Alternativ kann jeder dieser Gestängeabschnitte mehrere, also mindestens zwei Teilabschnitte, aufweisen, so dass in dem Gestängeabschnitt mindestens zwei Fluidverteiler mit zugeordneten Ausbringelementen angeordnet sind. Hierdurch kann die Leitungslänge der Ausbringleitungen reduziert werden.

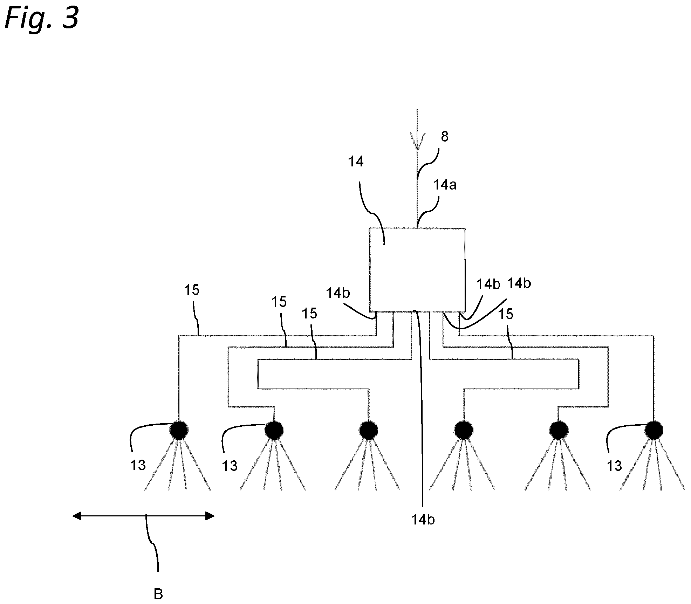

Es ist besonders vorteilhaft, die Ausbringleitungen 15 so auszuführen, dass sie gleich lang sind, so dass der Strömungsweg vom Verteilerauslass 14b bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Eine solche Ausführungsform ist in Figur 3 gezeigt, wobei hier nur zur Verdeutlichung dieses Aspekts ein einziger Fluidverteiler 14 mit zugeordneten Ausbringleitungen 15 und Ausbringelementen 13 dargestellt ist. Die anderen (nicht dargestellten) Fluidverteiler und Elemente der Spritzvorrichtung 10 und des Spritzgestänges 11 können wie zuvor beschrieben ausgeführt sein. In dem gezeigten Beispiel sind dem Fluidverteiler 14 lediglich beispielhaft sechs Ausbringelemente 13 zugeordnet und über entsprechende Ausbringleitungen 15 am Fluidverteiler 14 angeschlossen. Obwohl die räumlichen Abstände der einzelnen Ausbringelemente 13 zum Verteilerauslass 14b, über den sie gespeist werden, zum Teil stark unterschiedlich sind, sind alle sechs Ausbringleitungen 15 gleich lang und weisen denselben Durchmesser auf. Folglich weisen alle Ausbringleitungen 15 den gleichen Druckabfall und den gleichen Zeitverzug auf, bis Spritzflüssigkeit die Ausbringelemente 13 erreicht. Entsprechend kann eine besonders gleichmäßige Ausbringung von Spritzflüssigkeit erzielt werden. Die anderen Fluidverteiler (nicht dargestellt) der Spritzvorrichtung können identisch aufgebaut sein. Hierbei können die Ausbringleitungen 15 aller Fluidverteiler die gleiche Länge aufweisen.

Vorstehend wurde bereits festgestellt, dass alternativ hierzu auch die Möglichkeit besteht, dass z. B. zwar alle Ausbringleitungen eines Fluidverteilers die gleiche Länge aufweisen, jedoch Ausbringleitungen unterschiedlicher Fluidverteiler unterschiedlich lang sein können. Hierbei können die sich hieraus ergebenen unterschiedlichen Durchflusszeiten durch die Ausbringleitungen unterschiedlicher Fluidverteiler durch eine Steuereinrichtung 20 entsprechend bei der zeitlichen Ansteuerung der Ausbringelemente 13 berücksichtigt werden. Beispielsweise können in einer Steuereinrichtung 20, z. B. ein zentrales Steuergerät zum Steuern des Spritzvorgangs, welches zur Steuerung der Ausbringelemente 13 mit diesen in Signalverbindung steht, Offset-Werte hinterlegt sein, die ein Maß für die unterschiedlichen Durchflusszeiten je Fluidverteiler angeben. Entsprechend können unter Verwendung derartiger Offset-Werte die Schaltzeiten für die Ausbringelemente exakt eingehalten werden, wenn einzelne Teilabschnitte des Auslegers einzeln angesteuert werden, so dass trotz teilweiser unterschiedlicher Länge der Ausbringleitungen die Spritzflüssigkeit im Wesentlichen zum gleichen Zeitpunkt aus den Ausbringleitungen austritt.

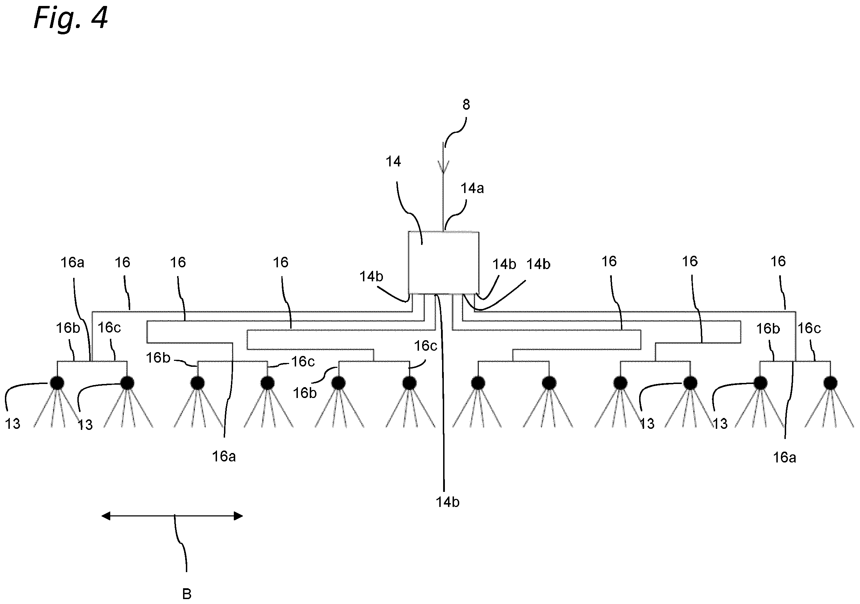

Figur 4 zeigt eine schematische Ansicht eines Fluidverteilers mit angeschlossenen Ausbringleitungen gemäß einer weiteren Ausführungsform. Die Besonderheit dieser Ausführungsform liegt darin, dass die Ausbringelemente 13 jeweils nicht über separate Ausbringleitungen angeschlossen sind, sondern dass die Ausbringleitungen 16 jeweils eine Verzweigungsstelle 16a aufweisen. Zur Verdeutlichung dieses Aspekts ist in Figur 4 wiederum ein einziger Fluidverteiler 14 mit zugeordneten Ausbringleitungen 16 und Ausbringelementen 13 dargestellt ist. Die anderen (nicht dargestellten) Fluidverteiler und weiteren Elemente der Spritzvorrichtung 10 und des Spritzgestänges 11 können wie zuvor beschrieben ausgeführt sein. Der besseren Übersichtlichkeit ist wiederum nur ein Teil der Komponenten mit Bezugszeichen gekennzeichnet.

Wie in Figur 4 erkennbar ist, weisen alle Ausbringleitungen 16 des Fluidverteilers 14, der hier lediglich beispielhaft sechs Ausbringleitungen 16 aufweist, jeweils eine Verzweigungsstelle 16a auf. Jede der Verzweigungsstellen 16a stellt zwei Leitungszweige 16b, 16c bereit. Die Verzweigungsstelle 16a ist nach Art einer Y-Verzweigung bzw. T-Verzweigung ausgebildet, so dass jeder Leitungszweig 16b, 16c an seinem freien Ende an ein Ausbringelement 13 angeschlossen ist. Der vom Verteilerauslass 14b kommende Teilstrom teilt sich somit an der Verzweigungsstelle 16a nochmals in zwei weitere Teilströme auf. Auch hier sind wieder alle Ausbringleitungen 16 des Fluidverteilers identisch ausgeführt, so dass der Zeitverzug, bis Spritzflüssigkeit von einem Verteilerauslass 14b das jeweilige Ausbringelement 13 erreicht, gleich ist. Die anderen Fluidverteiler (nicht dargestellt) der Spritzvorrichtung können identisch aufgebaut sein.

### Bezugszeichenliste

- 1: Landwirtschaftliche Verteilmaschine, z. B. gezogene Feldspritze
- 2: Fahrwerk
- 3: Chassis
- 4: Kabine
- 5: Antriebseinrichtung
- 6: Fahrtrichtung
- 7: Vorratstank
- 8: Flüssigkeitsstrom
- 9: Höhenverstellbares Parallelogrammgestänge
- 10: Spritzvorrichtung
- 11: Spritzgestänge
- 11a: Mittelteil
- 12: Seitlicher Ausleger
- 13: Ausbringelement
- 14: Fluidverteiler
- 14a: Verteilereinlass
- 14b: Verteilerauslass
- 15: Ausbringleitung
- 16: Ausbringleitung
- 16a: Verzweigungsstelle
- 16b: Leitungszweig
- 16c: Leitungszweig
- 20: Steuereinrichtung
- A: Schwenkachse in Fahrtrichtung
- B: Längsrichtung des Auslegers

## Patentansprüche

1. Spritzvorrichtung (10) für eine landwirtschaftliche Feldspritze zum dosierten Ausbringen von Spritzflüssigkeit, vorzugsweise auf landwirtschaftlichen Nutzflächen, umfassend
a) ein schwenkbares Spritzgestänge (11), umfassend zwei seitliche Ausleger (12), die jeweils eine Mehrzahl von Ausbringelementen (13) zum Versprühen und/oder Feinverteilen der Spritzflüssigkeit aufweisen,
b) wobei an jedem Ausleger (12) mindestens ein Fluidverteiler (14) zum Verteilen der Spritzflüssigkeit auf mehrere Teilströme angeordnet ist, aufweisend
- mindestens einen Verteilereinlass (14a) zum Zuführen von Spritzflüssigkeit, und
- mehrere Verteilerauslässe (14b) für die Teilströme, und
c) wobei jedes der Ausbringelemente (13) über eine Ausbringleitung (15; 16) mit einem der Verteilerauslässe (14b) fluidisch verbunden ist, wobei die Spritzvorrichtung **dadurch gekennzeichnet ist, dass** die Ausbringleitungen (15; 16) einen Innendurchmesser von kleiner 10 mm aufweisen.

2. Spritzvorrichtung (10) nach Anspruch 1, wobei
a) ein Flüssigkeitsstrom (8) von Spritzflüssigkeit mittels des Fluidverteilers (14) in Teilströme verzweigt und mittels der Ausbringleitungen (15; 16) auf getrennten Teilströmungswegen vom Fluidverteiler (14) zu den jeweiligen Ausbringelementen (13) gefördert wird; und/oder
b) die Ausbringleitungen (15; 16) derart ausgelegt sind, dass die einem Fluidverteiler (14) zugeordneten Teilströme auf ihren getrennten Teilströmungswegen vom Fluidverteiler (14) zu den jeweiligen Ausbringelementen (13) im Wesentlichen den gleichen Druckabfall und gleichen Zeitverzug, bis die Teilströme an dem jeweiligen Ausbringelement ankommen, aufweisen.

3. Spritzvorrichtung (10) nach Anspruch 1 oder 2, wobei jedes der Ausbringelemente (13) über eine separate Ausbringleitung (15) mit einem der Verteilerauslässe (14b) fluidisch verbunden ist.

4. Spritzvorrichtung (10) nach Anspruch 1 oder 2, wobei zumindest einige der Ausbringleitungen (16), vorzugsweise alle Ausbringleitungen (16), jeweils zumindest eine Verzweigungsstelle (16a) aufweisen, die eine Mehrzahl von Leitungszweigen (16b, 16c) bereitstellt, wobei jeweils ein Leitungszweig (16b, 16c) die Verzweigungsstelle (16a) mit einem Ausbringelement (13) verbindet.

5. Spritzvorrichtung (10) nach Anspruch 4, wobei die Verzweigungsstelle (16a) nach Art einer Y-Verzweigung oder nach Art einer T-Verzweigung ausgebildet ist.

6. Spritzvorrichtung (10) nach einem der vorherigen Ansprüche, wobei diejenigen Ausbringleitungen (15; 16), die am gleichen Fluidverteiler (14) angeschlossen sind, jeweils die gleiche Länge aufweisen.

7. Spritzvorrichtung (10) nach einem der vorherigen Ansprüche, wobei alle Ausbringleitungen (15; 16) die gleiche Länge aufweisen.

8. Spritzvorrichtung (10) nach einem der Ansprüche 1 bis 6, wobei der mindestens eine Fluidverteiler einen ersten Fluidverteiler und einen zweiten Fluidverteiler umfasst, wobei die Ausbringleitungen, die am ersten Fluidverteiler angeordnet sind, einen unterschiedliche Länge im Vergleich zu den Ausbringleitungen aufweisen, die am zweiten Fluidverteiler angeordnet sind.

9. Spritzvorrichtung nach Anspruch 8, ferner umfassend eine Steuereinrichtung (20), die zur Steuerung der Ausbringelemente mit diesen in Signalverbindung steht, wobei die Steuereinrichtung (20) ausgebildet ist, Schaltzeiten der Ausbringelemente in Abhängigkeit von hinterlegten Offset-Werten und/oder von Sensordaten zu bestimmen, wobei die Offset-Werte und/oder die Sensordaten für mindestens einen der Fluidverteiler eine Durchflusszeit durch die Ausbringleitungen des Fluidverteilers oder einen Zeitverzug, bis Spritzflüssigkeit die jeweiligen Ausbringelemente des Fluidverteilers erreicht oder einen Wert, aus dem ein Maß für die Durchflusszeit oder den Zeitverzug ableitbar ist, angeben.

10. Spritzvorrichtung (10) nach einem der vorherigen Ansprüche, wobei die Ausbringleitungen (15; 16)
a) als Schlauchleitungen und/oder als flexible Leitungen ausgeführt sind; oder
b) als Rohre ausgeführt sind oder Rohrleitungen umfassen.

11. Spritzvorrichtung (10) nach einem der vorherigen Ansprüche, wobei jeder Ausleger (12)
a) in mehrere Teilabschnitte unterteilt ist, wobei an jedem Teilabschnitt eine Mehrzahl von Ausbringelementen angeordnet ist und jedes Ausbringelement genau einem Teilabschnitt zugeordnet ist, und
b) mehrere Fluidverteiler aufweist, derart, dass an jedem Teilabschnitt ein Fluidverteiler angeordnet ist und die dem jeweiligen Teilabschnitt zugeordneten Ausbringelemente mit dem Fluidverteiler dieses Teilabschnitts über entsprechende Ausbringleitungen verbunden sind.

12. Spritzvorrichtung (10) nach Anspruch 11, wobei die Fluidverteiler der Teilabschnitte jeweils mittig in Längsrichtung (B) des Auslegers (12) am Teilabschnitt angeordnet sind.

13. Spritzvorrichtung (10) nach einem der vorherigen Ansprüche, wobei die Ausbringleitungen (15; 16)
a) einen Innendurchmesser von kleiner 6 mm, beispielsweise 4 mm, aufweisen; und/oder
b) eine Mindestlänge von 25 cm aufweisen, weiter vorzugsweise von mindestens 50 cm aufweisen; und/oder
c) sich in ihren Längen um nicht mehr als 30% unterscheiden.

14. Spritzvorrichtung (10) nach einem der vorherigen Ansprüche, wobei die Verteilerauslässe (14b) des Fluidverteilers (14) nicht auf einer Geraden liegen.

15. Spritzvorrichtung (10) nach einem der vorherigen Ansprüche, wobei die Ausbringleitungen (15; 16) derart ausgelegt sind, dass
a) ein Druckabfall vom Fluidverteiler (14) bis zum jeweiligen Ausbringelement (13) jeweils maximal 2 bar ist, weiter vorzugsweise jeweils maximal 1,5 bar ist; und/oder
b) ein Zeitverzug der Teilströme für ihren Strömungsweg vom Fluidverteiler (14) bis zum Erreichen der jeweiligen Ausbringelemente (13) jeweils maximal fünf Sekunden, weiter vorzugsweise maximal zwei Sekunden, weiter vorzugsweise maximal eine Sekunde, ist.

16. Spritzvorrichtung (10) nach einem der vorherigen Ansprüche, wobei eine Länge des Fluidverteilers (14) in Längsrichtung des Auslegers kleiner gleich drei Meter, vorzugsweise kleiner gleich zwei Meter, weiter vorzugsweise kleiner gleich ein Meter ist.

17. Spritzvorrichtung (10) nach einem der vorherigen Ansprüche, wobei eine Anzahl der Verteilerauslässe (14b) des Fluidverteilers im Bereich von 4 bis 16 liegt, vorzugsweise im Bereich von 6 bis 12 liegt.

18. Spritzvorrichtung (10) nach einem der vorherigen Ansprüche, wobei zumindest ein Teil der Ausbringleitungen (15; 16)
a) einen nicht-geraden Verlauf, vorzugsweise gekrümmten, Verlauf aufweist, und/oder
b) mindestens einen Abschnitt aufweist, der in Längsrichtung des Auslegers entlang eines der Ausleger geführt ist und mindestens einen Abschnitt aufweist, der in Vertikalrichtung entlang eines der Ausleger geführt ist.

19. Spritzvorrichtung (10) nach einem der vorherigen Ansprüche, wobei die Ausbringelemente (15) Spritzdüsen oder Spritzdüsen aufweisende Düsenstöcke sind.

20. Spritzvorrichtung (10) nach einem der vorherigen Ansprüche, wobei das Spritzgestänge um eine in Fahrtrichtung verlaufende Schwenkachse (A) bewegbar an einem Trägerfahrzeug (2) mittelbar oder unmittelbar angeordnet ist, und/oder wobei die zwei seitlichen Ausleger jeweils über eine vertikale Schwenkachse drehbar mit einem Mittelteil des Spritzgestänges verbunden sind, und wobei jeder Ausleger zueinander verschwenkbare Segmente aufweist, die um aufrechte Achsen zueinander verschwenkbar sind und die in einer senkrecht zur Fahrtrichtung der landwirtschaftlichen Verteilmaschine angeordneten Ebene relativ zueinander verschwenkbar sind.

21. Landwirtschaftliche Feldspritze (1), umfassend eine Spritzvorrichtung (10) nach einem der vorherigen Ansprüche, wobei die Feldspritze beispielsweise eine selbstfahrende (1) oder eine mittels eines Zugfahrzeugs gezogene oder eine an ein Zugfahrzeug angebaute Feldspritze ist.

## Claims

1. Spraying device (10) for an agricultural field sprayer for the metered application of spray liquid, preferably on agricultural land, comprising
a) a pivotable spray boom (11) comprising two lateral booms (12), each comprising a plurality of application elements (13) for spraying and/or finely distributing the spray liquid,
b) wherein at least one fluid distributor (14) for distributing the spray liquid to several partial streams is arranged on each boom (12), comprising
- at least one distributor inlet (14a) for supplying spray liquid, and
- a plurality of distributor outlets (14b) for the partial streams, and
c) wherein each of the application elements (13) is fluidically connected to one of the distributor outlets (14b) via a discharge line (15; 16), the spraying device being **characterised in that** the discharge lines (15; 16) comprise an internal diameter of less than 10 mm.

2. Spraying device (10) according to claim 1, wherein
a) a liquid flow (8) of spray liquid is branched into partial flows by means of the fluid distributor (14) and is conveyed by means of the discharge lines (15; 16) on separate partial flow paths from the fluid distributor (14) to the respective application elements (13); and/or
b) the discharge lines (15; 16) are designed in such a way that the partial flows associated with a fluid distributor (14) comprise substantially the same pressure drop and the same time delay until the partial flows arrive at the respective application element on their separate partial flow paths from the fluid distributor (14) to the respective application elements (13).

3. Spraying device (10) according to claim 1 or 2, wherein each of the application elements (13) is fluidically connected to one of the distributor outlets (14b) via a separate application line (15).

4. Spraying device (10) according to claim 1 or 2, wherein at least some of the discharge lines (16), preferably all discharge lines (16), comprise in each case at least one branching point (16a) which provides a plurality of line branches (16b, 16c), wherein in each case one line branch (16b, 16c) connects the branching point (16a) to a application element (13).

5. Spraying device (10) according to claim 4, wherein the branching point (16a) is configured in the manner of a Y-branch or in the manner of a T-branch.

6. Spraying device (10) according to one of the previous claims, wherein those discharge lines (15; 16) which are connected to the same fluid distributor (14) each comprise the same length.

7. Spraying device (10) according to one of the previous claims, wherein all discharge lines (15; 16) comprise the same length.

8. Spraying device (10) according to any one of claims 1 to 6, wherein the at least one fluid distributor comprises a first fluid distributor and a second fluid distributor, wherein the discharge lines arranged at the first fluid distributor comprise a different length compared to the discharge lines arranged at the second fluid distributor.

9. Spraying device according to claim 8, further comprising a control means (20) which is in signal connection with the spreading elements for controlling the latter, wherein the control means (20) is configured to determine switching times of the spreading elements as a function of stored offset values and/or of sensor data, wherein the offset values and/or the sensor data for at least one of the fluid distributors indicate a flow time through the discharge lines of the fluid distributor or a time delay until spray liquid reaches the respective application elements of the fluid distributor or a value from which a measure for the flow time or the time delay can be derived.

10. Spraying device (10) according to one of the previous claims, wherein the application lines (15; 16)
a) are configured as hose lines and/or as flexible lines; or
b) are configured as pipes or comprise pipes.

11. Spraying device (10) according to one of the previous claims, wherein each boom (12)
a) is divided into a plurality of subsections, wherein a plurality of application elements is arranged on each subsection and each application element is assigned to exactly one subsection, and
b) comprises a plurality of fluid distributors in such a way that a fluid distributor is arranged at each sub-section and the application elements assigned to the respective sub-section are connected to the fluid distributor of this sub-section via corresponding application lines.

12. Spraying device (10) according to claim 11, wherein the fluid distributors of the partial sections are each arranged centrally in the longitudinal direction (B) of the boom (12) on the partial section.

13. Spraying device (10) according to one of the previous claims, wherein the discharge lines (15; 16)
a) comprise an inner diameter of less than 6 mm, for example 4 mm; and/or
b) comprise a minimum length of 25 cm, further preferably of at least 50 cm; and/or
c) differ in their lengths by no more than 30%.

14. Spraying device (10) according to one of the previous claims, wherein the distributor outlets (14b) of the fluid distributor (14) do not lie on a straight line.

15. Spraying device (10) according to one of the previous claims, wherein the discharge lines (15; 16) are designed such that
a) a pressure drop from the fluid distributor (14) to the respective application element (13) is a maximum of 2 bar in each case, further preferably a maximum of 1.5 bar in each case;
and/or
b) a time delay of the partial flows for their flow path from the fluid distributor (14) to reaching the respective application elements (13) is in each case a maximum of five seconds, further preferably a maximum of two seconds, further preferably a maximum of one second.

16. Spraying device (10) according to one of the previous claims, wherein a length of the fluid distributor (14) in the longitudinal direction of the boom is less than or equal to three metres, preferably less than or equal to two metres, further preferably less than or equal to one metre.

17. Spraying device (10) according to one of the previous claims, wherein a number of the distributor outlets (14b) of the fluid distributor is in the range of 4 to 16, preferably in the range of 6 to 12.

18. Spraying device (10) according to one of the previous claims, wherein at least a part of the discharge lines (15; 16)
a) comprises a non-straight course, preferably a curved course, and/or
b) comprises at least one section which is guided in the longitudinal direction of the boom along one of the booms and at least one section which is guided in the vertical direction along one of the booms.

19. Spraying device (10) according to one of the previous claims, wherein the application elements (15) are spray nozzles or nozzle sticks comprising spray nozzles.

20. Spraying device (10) according to one of the preceding claims, wherein the sprayer boom is arranged on a carrier vehicle (2) so as to be movable about a pivot axis (A) extending in the direction of travel, directly or indirectly, and/or wherein the two lateral booms are each connected to a centre part of the sprayer boom so as to be rotatable via a vertical pivot axis, and wherein each boom comprises segments which are pivotable relative to one another, which are pivotable relative to one another about upright axes and which are pivotable relative to one another in a plane arranged perpendicular to the direction of travel of the agricultural distribution machine.

21. Agricultural field sprayer (1), comprising a spraying device (10) according to one of the previous claims, wherein the field sprayer is, for example, a self-propelled field sprayer (1) or a field sprayer towed by means of a towing vehicle or a field sprayer attached to a towing vehicle.

## Revendications

1. Dispositif de pulvérisation (10) pour un pulvérisateur agricole destiné à l'épandage dosé d'un liquide de pulvérisation, de préférence sur des surfaces utiles agricoles, comprenant
a) une tringlerie de pulvérisation (11) pivotante, comprenant deux consoles latérales (12) qui présentent respectivement une pluralité d'éléments d'épandage (13) pour la pulvérisation et/ou la distribution fine du liquide de pulvérisation,
b) dans lequel au moins un distributeur de fluide (14) pour répartir le liquide de pulvérisation en plusieurs courants partiels est disposé sur chaque console (12), présentant
- au moins une entrée de distributeur (14a) pour alimenter un liquide de pulvérisation, et
- plusieurs sorties de distribution (14b) pour les courants partiels, et
c) dans lequel chacun des éléments d'épandage (13) est en communication fluidique avec l'une des sorties de distributeur (14b) par l'intermédiaire d'une conduite d'épandage (15 ; 16),
le dispositif de pulvérisation étant **caractérisé en ce que** les conduites d'épandage (15 ; 16) présentent un diamètre intérieur inférieur à 10 mm.

2. Dispositif de pulvérisation (10) selon la revendication 1, dans lequel
a) un courant liquide (8) de liquide de pulvérisation est ramifié en courants partiels au moyen du distributeur de fluide (14) et est refoulé au moyen des conduites d'épandage (15 ; 16) sur des voies d'écoulement partielles du distributeur de fluide (14) aux éléments d'épandage (13) respectifs ; et/ou
b) les conduites d'épandage (15 ; 16) sont conçues de telle sorte que les courants partiels associés à un distributeur de fluide (14) présentent sur leurs voies d'écoulement partielles du distributeur de fluide (14) aux éléments d'épandage respectifs (13) substantiellement la même chute de tension et le même retard jusqu'à ce que les courants partiels arrivent à l'élément d'épandage respectif.

3. Dispositif de pulvérisation (10) selon la revendication 1 ou 2, dans lequel chacun des éléments d'épandage (13) est en communication fluidique avec l'une des sorties de distributeur (14b) par l'intermédiaire d'une conduite d'épandage (15) séparée.

4. Dispositif de pulvérisation (10) selon la revendication 1 ou 2, dans lequel au moins certaines des conduites d'épandage (16), de préférence toutes les conduites d'épandage (16), présentent respectivement au moins un point de ramification (16a) qui fournit une pluralité de branches de conduites (16b, 16c), dans lequel respectivement une branche de conduites (16b, 16c) relie le point de ramification (16a) à un élément d'épandage (13).

5. Dispositif de pulvérisation (10) selon la revendication 4, dans lequel le point de ramification (16a) est réalisé à la manière d'une ramification en Y ou à la manière d'une ramification en T.

6. Dispositif de pulvérisation (10) selon l'une quelconque des revendications précédentes, dans lequel les conduites d'épandage (15 ; 16) qui sont raccordées au même distributeur de fluide (14) présentent respectivement la même longueur.

7. Dispositif de pulvérisation (10) selon l'une quelconque des revendications précédentes, dans lequel toutes les conduites d'épandage (15 ; 16) présentent la même longueur.

8. Dispositif de pulvérisation (10) selon l'une quelconque des revendications 1 à 6, dans lequel ledit au moins un distributeur de fluide comprend un premier distributeur de fluide et un deuxième distributeur de fluide, dans lequel les conduites d'épandage qui sont disposées sur le premier distributeur de fluide présentent une longueur différente en comparaison avec les conduites d'épandage qui sont disposées sur le deuxième distributeur de fluide.

9. Dispositif de pulvérisation selon la revendication 8, comprenant en outre un dispositif de commande (20) qui est en communication de signaux avec les éléments d'épandage pour les commander, dans lequel le dispositif de commande (20) est réalisé pour déterminer des temps de commutation des éléments d'épandage en fonction de valeurs de décalage et/ou de données de capteur sauvegardées, dans lequel les valeurs de décalage et/ou les données de capteur indiquent pour au moins l'un des distributeurs de fluide un temps d passage à travers les conduites d'épandage du distributeur de fluide ou un retard jusqu'à ce que du liquide de pulvérisation atteigne les éléments d'épandage respectifs du distributeur de fluide, ou indiquent une valeur qui permet de dériver une mesure du temps de passage ou du retard.

10. Dispositif de pulvérisation (10) selon l'une quelconque des revendications précédentes, dans lequel les conduites d'épandage (15 ; 16)
a) sont configurées sous forme de conduites en tuyau souple et/ou de conduites flexibles ; ou
b) sont configurées sous forme de tubes ou comprennent des conduits.

11. Dispositif de pulvérisation (10) selon l'une quelconque des revendications précédentes, dans lequel chaque console (12)
a) est divisée en plusieurs tronçons, une pluralité d'éléments d'épandage étant disposée sur chaque tronçon, et chaque élément d'épandage étant associé à exactement un tronçon, et
b) présente plusieurs distributeurs de fluide de telle sorte qu'un distributeur de fluide est disposé sur chaque tronçon et les éléments d'épandage associés au tronçon respectif sont reliés au distributeur de fluide de ce tronçon par l'intermédiaire de conduites d'épandage correspondantes.

12. Dispositif de pulvérisation (10) selon la revendication 11, dans lequel les distributeurs de fluide des tronçons sont respectivement disposés au centre dans la direction longitudinale (B) de la console (12) sur le tronçon.

13. Dispositif de pulvérisation (10) selon l'une quelconque des revendications précédentes, dans lequel les conduites d'épandage (15 ; 16)
a) présentent un diamètre intérieur inférieur à 6 mm, par exemple de 4 mm ; et/ou
b) présentent une longueur minimale de 25 cm, de plus grande préférence d'au moins 50 cm ; et/ou
c) se distinguent par leur longueur de pas plus de 30 %.

14. Dispositif de pulvérisation (10) selon l'une quelconque des revendications précédentes, dans lequel les sorties de distributeur (14b) du distributeur de fluide (14) ne se trouvent pas sur une droite.

15. Dispositif de pulvérisation (10) selon l'une quelconque des revendications précédentes, dans lequel les conduites d'épandage (15 ; 16) sont conçues de telle sorte
a) qu'une chute de pression du distributeur de fluide (14) jusqu'à l'élément d'épandage (13) respectif est au maximum de 2 bar respectivement, de plus grande préférence est au maximum de 1,5 bar respectivement ; et/ou
b) qu'un retard des courants partiels pour leur voie d'écoulement du distributeur de fluide (14) jusqu'à atteindre les éléments d'épandage (13) respectifs est au maximum de cinq secondes respectivement, de plus grande préférence au maximum d'une seconde.

16. Dispositif de pulvérisation (10) selon l'une quelconque des revendications précédentes, dans lequel une longueur du distributeur de fluide (14) dans la direction longitudinale de la console est inférieure ou égale à trois mètres, de préférence inférieure ou égale à deux mètres, de plus grande préférence inférieure ou égale à un mètre.

17. Dispositif de pulvérisation (10) selon l'une quelconque des revendications précédentes, dans lequel un nombre des sorties de distributeur (14b) du distributeur de fluide est compris dans la plage de 4 à 16, de préférence dans la plage de 6 à 12.

18. Dispositif de pulvérisation (10) selon l'une quelconque des revendications précédentes, dans lequel au moins une partie des conduites d'épandage (15 ; 16)
a) présente un tracé non droit, de préférence un tracé courbe, et/ou
b) présente au moins une partie qui est guidée dans la direction longitudinale de la console le long d'une des consoles et présente au moins une partie qui est guidée dans la direction verticale le long d'une des consoles.

19. Dispositif de pulvérisation (10) selon l'une quelconque des revendications précédentes, dans lequel les éléments d'épandage (15) sont des buses de pulvérisation ou des porte-buses présentant des buses de pulvérisation.

20. Dispositif de pulvérisation (10) selon l'une quelconque des revendications précédentes, dans lequel la tringlerie de pulvérisation est disposée directement ou indirectement sur un véhicule tracteur (2) de manière mobile autour d'un axe de pivotement (A) s'étendant dans le sens de la marche, et/ou dans lequel les deux consoles latérales sont reliées à une partie centrale de la tringlerie de pulvérisation respectivement de manière rotative autour d'un axe de pivotement vertical, et dans lequel chaque console présente des segments pivotants les uns par rapport aux autres qui sont pivotants les uns par rapport aux autres autour d'axes verticaux et qui sont pivotants les uns par rapport aux autres dans un plan disposé perpendiculairement au sens de la marche de la machine de distribution agricole.

21. Pulvérisateur agricole (1), comprenant un dispositif de pulvérisation (10) selon l'une quelconque des revendications précédentes, dans lequel le pulvérisateur est par exemple un pulvérisateur autotracté (1) ou un pulvérisateur tracté au moyen d'un véhicule tracteur ou un pulvérisateur installé sur un véhicule tracteur.
